# EUROPÄISCHE PATENTSCHRIFT

(11) **EP 0 445 106 B1**
(45) Veröffentlichungstag und Bekanntmachung des Hinweises auf die Patenterteilung: **26.04.1995**
(21) Anmeldenummer: 91890042.4
(22) Anmeldetag: 01.03.1991
(51) Int. Cl.: B30B 11/02

(54) **Presse zur Herstellung von Formkörpern aus schüttbarer Masse**
Press for making articles from particulate material
Presse pour fabriquer des objets en matière pulvérulente

(30) Priorität: 02.03.1990 AT 503/90
(43) Veröffentlichungstag der Anmeldung: 04.09.1991
(73) Patentinhaber: LEINWEBER MASCHINEN GESELLSCHAFT m.b.H. & Co. KG, A-2700 Wr. Neustadt (AT)
(72) Erfinder: Leinweber, Johann, Ing., A-2700 Wr. Neustadt (AT)
(74) Vertreter: Müllner, Erwin, Dr.

(56) Entgegenhaltungen:
- CH-A- 480 150
- DE-A- 2 406 688
- FR-A- 911 076
- GB-A- 1 225 784
- US-A- 2 375 252
- US-A- 3 890 413

## Beschreibung

Die Erfindung betrifft eine Presse zur Herstellung von Formkörpern aus schüttbarer Masse, insbesondere von Bremsbelägen aus Reibbelagpulver.

Zur Herstellung von Bremsbelägen werden Einzelpressen wie auch Rundtaktanlagen verwendet, die jeweils den speziellen Erfordernissen des Spezialproduktes angepaßt sind und infolge der großen Anzahl von Produktions- bzw. Verfahrensschritten vom Reibbelagpulver bis zum Fertigprodukt besonders aufwendige Konstruktionen erforderlich machen. So sind oft beheizbare Formen vorgesehen, die über eine Zwischenform beschickbar sind, aus welcher die schüttbare Masse mittels eines aus einem Gegendruckkolben ausfahrbaren Ausstoßers in die Formen schiebbar ist. Die Druckkraft eines Hauptpreßzylinders ist mindestens einem Preßstempel zuführbar, dessen Stirnfläche bzw. Stirnflächen jeweils den Boden der oder einer der Formen bildet, wobei jeder Formkörper durch einen Preßstempel und den Gegendruckkolben verdichtet wird, die hydraulisch betätigbar sind. Da es unterschiedlich große Bremsbeläge gibt, werden Pressen unterschiedlicher Leistung (z.B. 30t, 65t, 100t) angeboten. Wie aus den obigen Bemerkungen hervorgeht, ist eine derartige Presse im allgemeinen nicht nur eine Vorrichtung mit Preßzylinder, Preßkolben und Joch, sondern eine komplexe Vorrichtung, die darüber hinaus ein Beladesystem etwa mittels einer Zwischenform, ein Zuführsystem von Rückenplatten für die Bremsbeläge, ein Transfersystem zum Übertragen des allenfalls vorverdichteten Inhalts der Zwischenform in die beheizte Form, eine Steuerung für ein intermittierendes Pressen mittels eines Gegendruckkolbens sowie einer einschwenkbaren Gegendruckplatte und eines thermisch isoliert auf einen Zwischenstempel des Preßzylinders aufgesetzten Preßstempels und ein Ausstoßersystem aufweist. Zum wirtschaftlichen Betrieb einer solchen Presse ist ein hoher Auslastungsgrad erforderlich. Um daher mit einer Presse nicht nur eine einzige, der Pressenleistung entsprechende Bremsbelagtype herstellen zu können, hat man Mehrfachformen gebaut, mit deren Hilfe auf der Presse anstatt nur eines großen Bremsbelages etwa zwei oder vier kleinere Bremsbeläge gleichzeitig hergestellt werden konnten. Die Einzelherstellung hat sich dann als unwirtschaftlich erwiesen, wenn die Presse etwa bei der Produktion eines kleinen Bremsbelages nur im Teillastbereich arbeitet. Es ist in diesem Fall zur Beibehaltung des optimalen Wirkungsgrades Vollastbetrieb mit einer Mehrfachform zweckmäßig. Die Funktion einer Mehrfachform ist allerdings in der Praxis problematisch, weil geringste Unterschiede etwa bei der Befüllung eines einzigen Formnestes zum Ausschuß der gesamten in der Mehrfachform vereinigten Bremsbeläge führen kann.

Als Abhilfe dagegen ist gemäß der US-A-3 890 413 vorgesehen, daß im Gegendruckkolben selbst ein weiteres hydraulisches System vorgesehen ist, das aus mehreren Zylindern und zugehörigen Kolben besteht. Jeder Kolben trägt einen zusätzlichen Preßstempel, der jeweils von oben in die jeweilige Form ragt. In Zusammenwirkung mit den Preßstempeln, die am Preßkolben fest angebracht sind und die von unten in die jeweilige Form ragen, kann dann die Masse in den einzelnen Formen verpreßt werden, wobei die Preßkraft in den einzelnen Formen infolge des hydraulischen Systems im Gegendruckkolben in allen Formen gleich ist. Mit dieser Vorrichtung kann immer nur eine vorbestimmte Anzahl von Preßlingen gleichzeitig hergestellt werden, wobei die Preßkraft des Preßkolbens bzw. des Gegendruckkolbens jeweils auf alle Preßlinge gleichmäßig aufgeteilt wird.

Aus der FR-A-911 076 ist bekannt, daß sehr hohe Preßkräfte erzeugt werden können, indem in einem Zylinderblock mehrere Zylinderbohrungen mit entsprechenden Preßkolben vorgesehen sind, die alle auf eine gemeinsame Preßform wirken. Laut dieser FR-A-911 076 hat dies gegenüber einem entsprechenden größeren Preßkolben den Vorteil, daß mehrere kleinere Preßkolben leichter abzudichten sind.

Die Erfindung zielt darauf ab, eine Presse zu schaffen, mit der nicht nur eine einzige Bremsbelagtype optimal hergestellt werden kann, sondern mit der (mit den Vorteilen von leistungsangepaßten Einzelpressen) eine Mehrzahl von Typen, jeweils mit hohem Wirkungsgrad, hergestellt werden kann.

Erfindungsgemäß wird eine Presse zur Herstellung von Formkörpern aus schüttbarer Masse, insbesondere von Bremsbelägen aus Reibbelagpulver,vorgeschlagen, in die verschiedene Formenträger, auf denen unterschiedlich viele, vorzugsweise maximal je vier, Formen vereinigt sind, eingebaut werden können und die einen Hauptpreßzylinder sowie einen Gegendruckzylinder mit einem Gegendruckkolben aufweist, wobei der Hauptpreßzylinder als Zylinderblock mit mehreren, vorzugsweise vier, Zylinderbohrungen mit je einem Preßkolben ausgebildet ist und - für den Fall, daß die Zahl der auf dem Formenträger angebrachten Formen der Zahl der Preßkolben entspricht - auf jedem Preßkolben ein Preßstempel befestigt werden kann und - für den Fall, daß die Zahl der auf dem Formenträger angebrachten Formen kleiner ist als die Zahl der Preßkolben - eine Anzahl der Preßkolben (z.B. paarweise je zwei) durch eine Brücke, die einen Preßstempel trägt, stirnseitig verbunden werden kann, sodaß die Anzahl der Formen auf dem Formenträger sowie die Anzahl der Durchbrüche im Formenträger der Anzahl der Preßstempel entspricht, und wobei die Stirnfläche des Preßstempels bzw. die Stirnflächen der Preßstempel jeweils den Boden der Form bzw. die Böden der Formen bilden und jeder Formkörper durch einen Preßstempel und den Gegendruckkolben verdichtet wird. Durch die Verwendung eines gemeinsamen Zylinderblockes kann einerseits eine kompakte Bauweise erzielt werden. Die verglichen mit individuellen Einzelpreßkolben wesentlich näher zusammengerückten Preßkolben können anderseits jeweils mit einer auf dem Formenträger aufgebauten Form zusammenwirken, oder aber es besteht die Möglichkeit, die Teilleistungen durch die genannten Brücken über zwei oder vier Preßkolben zu addieren und für einen oder zwei Preßstempel für eine große oder zwei mittlere Formen zusammenzufassen. Somit weist die Presse eine vorgegebene Anzahl, z.B. vier, Preßkolben auf, die variabel mechanisch verbindbar sind und mit austauschbaren Formenträgern zusammenarbeiten. Dise Presse gestattet eine weitaus höhere Nutzung und ist insbesondere für den Anwender, der Kleinserien produziert, von besonderem Vorteil.

Vorzugsweise ist im Gegendruckkolben ein ausfahrbarer Ausstoßer vorgesehen, der mit einer Anzahl von Ausstoßstempeln versehen werden kann, die der jeweiligen Anzahl von Preßstempeln entspricht, sodaß die Form bzw. die Formen über eine Zwischenform bzw. Zwischenformen beschickbar sind, indem die schüttbare Masse mittels des Ausstoßstempels bzw. der Ausstoßstempel in die Form bzw. Formen geschoben wird. Es ist bei dieser Presse somit auch die Zahl der Ausstoßer, die von einer Stange ausgehend z.B. auf einer Montageplatte der Anzahl und Größe der Formen entsprechend montierbar sind, veränderbar.

Es ist zweckmäßig, wenn die Zylinderbohrungen in einen gemeinsamen Druckraum des Zylinderblocks einmünden. Dadurch ist ein idealer Druckausgleich unabhängig von der Füllung der Formnester möglich.

Um mit der erfindungsgemäßen Presse wie bisher die volle Leistung bei der Herstellung eines einzelnen, großen Bremsbelages zur Verfügung zu haben, ist es zweckmäßig, wenn eine der Brücken als sämtliche Preßkolben stirnseitig verbindende Platte ausgebildet ist, die einen einzigen Preßstempel für eine Preßform trägt.

Soll ein großer Bremsbelag etwa mit reduzierter Leistung hergestellt werden, dann ist es vorteilhaft, wenn die Presse vier im Quadrat angeordneten Preßkolben aufweist, wobei eine Brücke vorgesehen ist, die zwei Preßkolben diagonal verbindet und auf der ein Preßstempel für eine Form angeordnet ist. Die anderen beiden Preßkolben können an einem Anschlag anliegen. Dieser Preßstempel arbeitet unmittelbar mit der Einzelform zusammen.

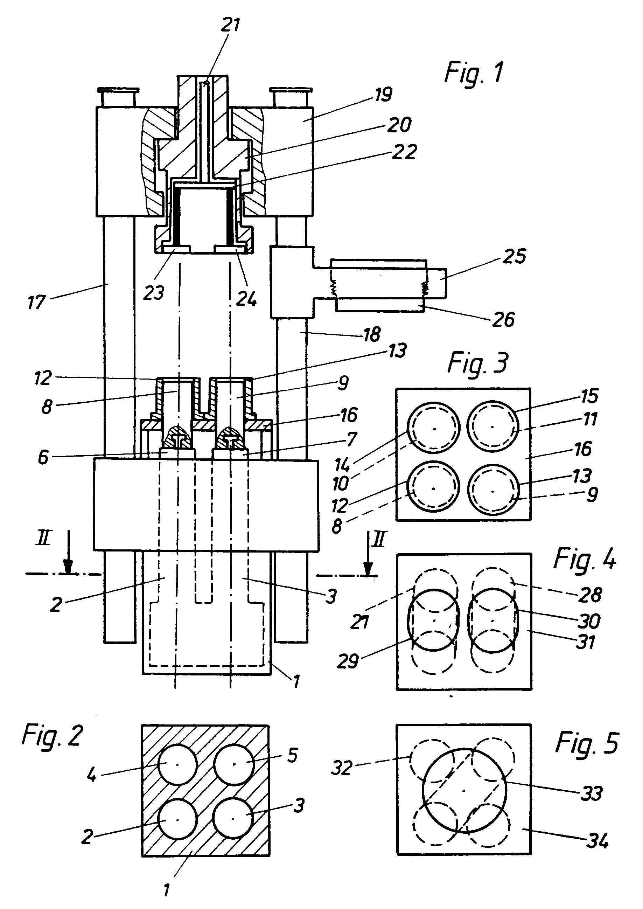

Ausführungsbeispiele des Erfindungsgegenstandes sind in den Zeichnungen dargestellt. Fig. 1 zeigt eine Presse gemäß der Erfindung in schematischer Darstellung, teilweise im Schnitt, Fig. 2 einen Schnitt durch den Zylinderblock gemäß Linie II-II in Fig. 1, Fig. 3 einen Formträger mit vier Formen über vier Preßstempeln, Fig. 4 einen anderen Formträger mit zwei Formen und Fig. 5 einen weiteren Formträger mit einer Form.

Eine Presse zur Herstellung von Formkörpern aus schüttbarer Masse, im Beispiel von Bremsbelägen aus Reibbelagpulver, umfaßt einen Zylinderblock 1 mit vier Zylinderbohrungen 2, 3, 4, 5 für vier Preßkolben 6, 7. Die Preßkolben tragen gemäß Fig. 1 und 3 jeweils einen Preßstempel 8, 9, 10, 11, der mit je einer Form 12, 13, 14, 15 auf einem plattenförmigen Formträger 16 zusammenarbeitet. Auf Standsäulen 17, 18 ist ein Joch 19 vorgesehen, in dem ein Gegendruckkolben 20 axial verschiebbar ist. Ferner nimmt der Gegendruckkolben 20 eine pneumatisch ausschiebbare Stange 21 auf, die eine Montageplatte 22 für eine der Anzahl der Formen 12, 13, 14, 15 entsprechende Zahl von Ausstoßern 23, 24 trägt. Diese bestehen jeweils aus einer Stange und einer dem Grundriß des Formennestes entsprechenden Ausstoßerplatte. Auf der Standsäule 18 ist ein Träger 25 mit einer axial gegen Federkraft beweglichen Gegendruckplatte 26 ein- und ausschwenkbar vorgesehen.

Die Funktion der Presse nach Fig. 1, 2 und 3 wird nachfolgend kurz erläutert. Bei ausgeschwenktem Träger 25 wird eine nicht dargestellte Zwischenform mit vorgepreßtem Reibbelagpulver über die Formen 12, 13, 14, 15 gebracht. Vorerst füllen die Preßstempel 8, 9, 10, 11 die Formen 12, 13, 14 15 zur Gänze aus. Die Ausstoßer 23, 24 werden an die Oberflächen des Reibbelagpulvers in den manschettenartigen Zwischenformen angelegt, die auf den Formen 12, 13, 14, 15 aufruhen. Bei gleichzeitigem Absenken der Preßstempel 8, 9, 10, 11 - synchron mit den Ausstoßern 23, 24 - wird das Reibbelagpulver in die Formen 12, 13, 14, 15 geschoben. Die Ausstoßer 23, 24 werden zurückgezogen, der Träger 25 mit der Gegendruckplatte 26 wird eingeschwenkt. Letztere trägt durch Elektromagnete fixiert vier Rückenplatten,auf welche der Reibbelag aufgepreßt werden soll. Durch Vorschub des Gegendruckkolbens 20 wird die Gegendruckplatte 26 des eingeschwenkten Halters 25 mit den Rückenplatten auf den Inhalt der Formen 12, 13, 14, 15 gedrückt. Sodann erfolgt der eigentliche Preßvorgang mittels der Preßkolben 6, 7 und der Preßstempel 8, 9, 10, 11. Die Fertigprodukte werden ausgestoßen und von den Elektromagneten der Gegendruckplatte 26 erfaßt und mittels des Halters 25 ausgeschwenkt und abgelegt.

Während Fig. 1 und 3 eine Trägerplatte 16 mit vier Öffnungen für vier Preßstempel 8, 9, 10, 11 und vier Formen 12, 13, 14, 15 zeigen, läßt Fig. 4 zwei strichliert dargestellte Brücken 27, 28 erkennen, die je zwei Kolben 6, 7 miteinander mechanisch verbinden. Die Brücken tragen je einen Preßstempel, die mit je einer Form 29, 30 zusammenarbeiten. Somit wird die Kraft von je zwei Preßkolben über die Brücken 27, 28 auf je eine größere Form 29, 30 vereinigt. Die Formen 29, 30 sind auf einem Formenträger 31 vorgesehen, der zwei Durchbrüche für die beiden Preßstempel der Formen 29, 30 aufweist. Wenn die vier Preßkolben 6, 7 durch eine Platte verbunden sind, dann können die vier Einzelkräfte addiert und in einem Preßstempel konzentriert werden. Fig. 5 zeigt die Halbierung dieser Kräfte, indem zwei Preßkolben diagonal durch eine Brücke 32 verbunden sind, die einen Preßstempel für eine Form 33 trägt. Der Formträger 34 weist eine Öffnung auf, durch die der vorgenannte Preßstempel durchgreift.

Es kann daher die in Fig. 1 dargestellte Presse sehr flexibel für unterschiedliche Größen des Fertigproduktes (z.B. Bremsbeläge) jeweils mit optimalem Wirkungsgrad eingesetzt werden. Die Grundkonzeption gestattet eine Adaptierung bloß durch Austausch der Formenträger 16, 31, 34, auf welchen die Formen aufgebaut sind und allenfallls in Übereinstimmung mit den Formen und deren Nestgrundriß durch Austausch der Ausstoßer. Zylinderblock 1, Preßkolben 6, 7, Preßstempel 8, 9, 10, 11 und Formenträger 16 bzw. 30, bzw. 34 mit den jeweiligen Formen bilden eine Baueinheit, die als Modul in verschiedene Pressensysteme eingebaut werden kann. So kann der Modul bei herkömmlichen Portalpressen mit oder ohne Zuführung durch eine Zwischenform wie auch bei Zweisäulenpressen mit Gegendruckkolben im Joch und einschwenkbarer Gegendruckplatte (Fig. 1) und ferner bei Rundtischsystemen im Gegensatz zu vorgenannten Individualsystemen eingebaut werden.

## Patentansprüche

1. Presse zur Herstellung von Formkörpern aus schüttbarer Masse, insbesondere von Bremsbelägen aus Reibbelagpulver, in die verschiedene Formenträger (16, 31, 34), auf denen unterschiedlich viele, vorzugsweise maximal je vier, Formen (12-15; 29, 30; 33) vereinigt sind, eingebaut werden können und die einen Hauptpreßzylinder (1) sowie einen Gegendruckzylinder mit einem Gegendruckkolben (20) aufweist, wobei der Hauptpreßzylinder als Zylinderblock (1) mit mehreren, vorzugsweise vier, Zylinderbohrungen (2-5) mit je einem Preßkolben (6, 7) ausgebildet ist und - für den Fall, daß die Zahl der auf dem Formenträger (16) angebrachten Formen (12-15) der Zahl der Preßkolben (6, 7) entspricht - auf jedem Preßkolben (6, 7) ein Preßstempel (8-11) befestigt werden kann und - für den Fall, daß die Zahl der auf dem Formenträger (31, 34) angebrachten Formen (29, 30; 33) kleiner ist als die Zahl der Preßkolben (6, 7) - eine Anzahl der Preßkolben (6, 7) (z.B. paarweise je zwei) durch eine Brücke (27, 28; 32), die einen Preßstempel trägt, stirnseitig verbunden werden kann, sodaß die Anzahl der Formen (12-15; 29, 30; 33) auf dem Formenträger (16, 31, 34) sowie die Anzahl der Durchbrüche im Formenträger (16, 31, 34) der Anzahl der Preßstempel entspricht, und wobei die Stirnfläche des Preßstempels bzw. die Stirnflächen der Preßstempel (8-11) jeweils den Boden der Form (33) bzw. die Böden der Formen (12-15; 29, 30) bilden und jeder Formkörper durch einen Preßstempel (8-11) und den Gegendruckkolben (20) verdichtet wird.

2. Presse nach Anspruch 1, bei der im Gegendruckkolben (20) ein ausfahrbarer Ausstoßer (21) vorgesehen ist, der mit einer Anzahl von Ausstoßstempeln (23, 24) versehen werden kann, die der jeweiligen Anzahl von Preßstempeln (8-11) entspricht, sodaß die Form (33) bzw. die Formen (12-15; 29, 30) über eine Zwischenform bzw. Zwischenformen beschickbar sind, indem die schüttbare Masse mittels des Ausstoßstempels bzw. der Ausstoßstempel (23, 24) in die Form (33) bzw. Formen (12-15; 29, 30) geschoben wird.

3. Presse nach Anspruch 1 oder 2, bei der die Zylinderbohrungen (2-5) in einen gemeinsamen Druckraum des Zylinderblocks (1) einmünden.

4. Presse nach einem der Ansprüche 1 bis 3, bei der eine der Brücken als eine sämtliche Preßkolben (6, 7) stirnseitig verbindende Platte ausgebildet ist, die einen einzigen Preßstempel für eine Preßform (33) trägt.

5. Presse nach einem der Ansprüche 1 bis 4, die vier im Quadrat angeordnete Preßkolben (6, 7) aufweist, wobei eine Brücke (32) vorgesehen ist, die zwei Preßkolben diagonal verbindet und auf der ein Preßstempel für eine Form (33) angeordnet ist.

## Claims

1. A press for the manufacture of shaped bodies from pourable material, in particular of brake linings of friction lining powder, into which various matrix carriers (16, 31, 34) can be incorporated, on which different amounts, preferably a maximum of four in each case, of matrices (12-15; 29, 30; 33) are combined, and which has a main press cylinder (1) and also a counterpressure cylinder with a counterpress plunger (20), in which the main press cylinder is constructed as a cylinder block (1) with several, preferably four, cylinder bores (2-5) each with a press plunger (6-7) and - in the event of the number of matrices (12-15) arranged on the matrix carrier (16) corresponding to the number of press plungers (6, 7) - on each press plunger (6, 7) a die (8-11) can be attached and - in the event of the number of matrices (29, 30; 33) arranged on the matrix carrier (31, 34) being smaller than the number of press plungers (6, 7) - a number of press plungers (6, 7) (e.g. each two in pairs) can be connected on the end face by a bridge (27, 28; 32), which carries a die, so that the number of matrices (12-15; 29, 30; 33) on the matrix carrier (16, 31, 34) and also the number of perforations in the matrix carrier (16, 31, 34) corresponds to the number of dies, and in which the end face of the die or the end faces of the dies (8-11) in each case form the base of the matrix (33) or the bases of the matrices (12-15; 29, 30) and each shaped body is compressed by a die (8-11) and the counterpressure plunger (20).

2. A press according to Claim 1, in which there is provided in the counterpressure plunger (20) an extendable ejector (21), which can be provided with a number of ejector stamps (23, 24), which corresponds to the respective number of dies (8-11), so that the matrix (33) or the matrices (12-15; 29, 30) are able to be charged via an intermediate matrix or intermediate matrices, by the pourable material being pushed by means of the ejector stamp or the ejector stamps (23, 24) into the matrix (33) or matrices (12-15; 29, 30).

3. A press according to Claim 1 or 2, in which the cylinder bores (2-5) open into a common pressure chamber of the cylinder block (1).

4. A press according to one of Claims 1 to 3, in which one of the bridges is constructed as a plate connecting all the press plungers (6, 7) on the end side, which plate carries a single die for one press matrix (33).

5. A press according to one of Claims 1 to 4, which has four press plungers (6, 7) arranged in a square, in which a bridge (32) is provided, which connects two press plungers diagonally and on which one die is arranged for one matrix (33).

## Revendications

1. Presse pour la fabrication de corps moulés, à partir d'une masse pouvant se présenter en vrac, en particulier de garnitures de freinage à partir de poudre de garnitures de friction, dans lequel peuvent être montés différents supports de moules (16, 31, 34) sur lesquels sont réunis différents moules (12 à 15; 29, 30; 33) chaque fois au nombre maximal de quatre, et présentant un cylindre principal de presse (1) ainsi qu'un cylindre de contre-pression avec un piston de contre-pression (20), le cylindre principal de presse étant réalisé sous forme de bloc-cylindre (1) avec plusieurs alésages de cylindre (2 à 5), de préférence quatre, ayant chacun un piston de presse (6, 7) et - dans le cas où le nombre des moules (12 à 15) montés sur le support de moules (16) correspond au nombre des pistons de presse (6, 7) - un poinçon de pressage (8 à 11) pouvant être fixé sur chaque piston de presse (6, 7) et - dans le cas où le nombre des moules (29, 30; 33) montés sur le support de moules (31, 34) est inférieur au nombre des pistons de presse (6, 7) - un nombre de pistons de presse (6, 7) (par exemple disposés par paires de pistons) pouvant être relié en face frontale au moyen d'un pont (27, 28; 32) portant un poinçon de presse, le nombre de moules (12 à 15; 29, 30; 33) montés sur le support de moules (16, 31, 34) ainsi que le nombre des passages dans les supports de moules (16, 31, 34) correspondant au nombre des poinçons de presse, et la face frontale du poinçon de presse, ou les faces frontales des poinçons de presse (8 à 11) constituant chaque fois le fond du moule (33), ou les fonds des moules (12 à 15; 29, 30) et chaque corps moulé étant comprimé au moyen d'un poinçon de presse (8 à 11) et du piston de contre-pression (20).

2. Presse selon la revendication 1, dans laquelle un éjecteur (21) déployable est prévu dans le piston de contre-pression (20) et qui peut être pourvu d'un nombre déterminé de poinçons d'éjection (23, 24), nombre correspondant au nombre respectif de poinçons de presse (8 à 11), de sorte que le moule (33), ou les moules (12 à 15; 29, 30), peuvent être équipés d'un moule intermédiaire, ou de moules intermédiaires, dans lesquels la masse pouvant se présenter en vrac est introduite au moyen du poinçon d'éjection, respectivement des poinçons d'injection (23, 24), dans le moule (33), respectivement les moules (12 à 15; 29, 30).

3. Presse selon la revendication 1 ou 2, dans laquelle les alésages de cylindre (2 à 5) débouchent dans un espace de pression commun du bloc-cylindre (1).

4. Presse selon l'une des revendications 1 à 3, dans laquelle l'un des ponts est réalisé sous forme de plaque reliant frontalement l'ensemble des pistons de presse (6, 7) et portant un poinçon de presse unique pour un moule de presse (33).

5. Presse selon l'une des revendications 1 à 4, présentant quatre pistons de presse (6, 7) disposés en carré, un pont (32) étant prévu, reliant en diagonale deux pistons de presse et sur lequel est disposé un poinçon de presse pour un moule (33).
